# EUROPEAN PATENT APPLICATION

(11) **EP 1 526 544 A2**
(43) Date of publication of application: **27.04.2005**
(21) Application number: 04025183.7
(22) Date of filing: 22.10.2004
(51) Int. Cl.: G11B 31/00

(54) **System and method for driving portable multimedia player**

(30) Priority: 24.10.2003 KR 2003074731
(71) Applicant: Reigncom Ltd., Seoul, 137-070 (KR)
(72) Inventor: Kim, Dong Chul, Seoul, 130-878 (KR); Cho, Seak Woo, Soaa-gu Bucheon-si Gyeonggi-do, 422-240 (KR)
(74) Representative: Niederkofler, Oswald A., Dipl.-Phys.

(57) **Abstract**

A system for driving a mobile multimedia player where a mobile disk driver provided from an operating system level is interworked with a filter driver for processing a command of a manager tool. In the mobile multimedia player, OS level control and control with a manager tool can be performed, wherein the mobile multimedia player can correspond to the mobile disk driver and the filter driver, respectively.

## Description

### CROSS-REFERENCE TO RELATED APPLICATIONS

Pursuant to 35 U.S.C. § 119(a), this application claims the benefit of earlier filing date and right of priority to Korean Application No. 10-2003-74731, filed on October 24, 2003, the contents of which is hereby incorporated by reference herein in its entirety.

### BACKGROUND OF THE INVENTION

### Field of the Invention

The present invention generally relates to a mobile multimedia player driving system, and more particularly, to a mobile multimedia player driving system and method for interworking a filter driver for processing commands of a manager tool and a mobile disk driver provided by an operating system (hereinafter, referred to as "OS") level.

### Description of the Related Art

Recently, various types of mobile multimedia players have been developed such as a flash-type player, a compact disk type player and a hard-type player. The flash-type player records and plays multimedia contents in a flash memory wherein the flash memory is capable of storage capacities such as 128M bytes, 256M bytes and 512M bytes. The compact disk type player optically reads or writes digital information by driving a compact disk. The hard-type player writes and plays digital information of an embedded hard disk having a capacity of more than one gigabyte.

Generally, mobile multimedia players store multimedia contents or digital information such as music, still images or motion picture images. A user can enjoy listening to music while moving with a mobile multimedia player. Altematively, the user can store or use digital information by using the mobile multimedia player as an auxiliary storage device for a personal computing device. This can be done by linking the player to the computing device via a connector such as a USB port.

A related art mobile multimedia player is preferably physically connected to a USB port of a personal computing device in order to store or delete multimedia contents or digital information. When connected, the mobile multimedia player can be controlled by the personal computing device. Generally, it is controlled by an OS level control method or by using a manager tool.

In the OS level control method, when the multimedia player is physically connected to the USB port, a mobile disk driver provided by the OS is loaded in a memory. Thereafter, a searcher application program, provided by the OS, recognizes the mobile multimedia player as a physical disk so that a user can employ the player by using the searcher. Here, the mobile multimedia player is controlled by restrictively using copying or deleting functions provided by the searcher.

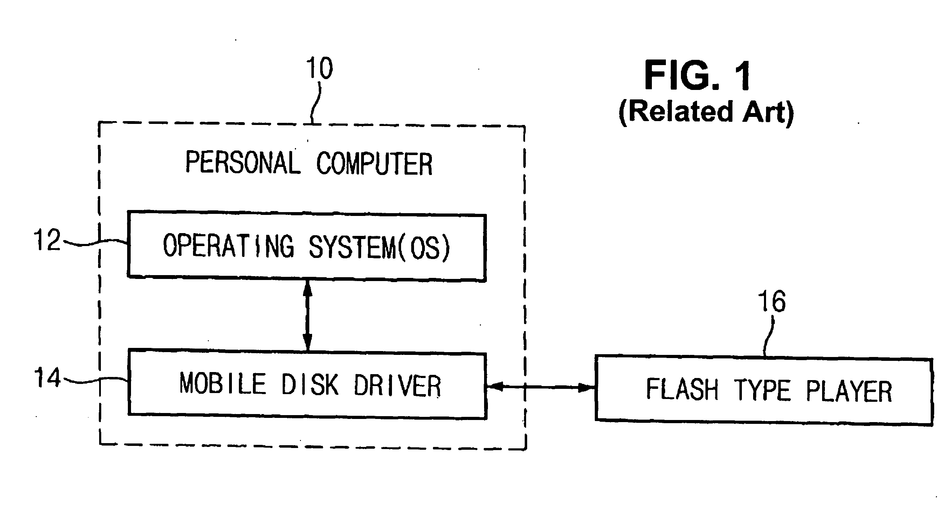

As shown in Fig. 1, a personal computer 10 includes a mobile disk driver 14 provided by an operating system (OS) 12. A mobile multimedia player such as a flash-type player 16 is connected to the personal computer 10 via a connector such as a USB port. At this state, the user can control the flash-type player 16 by using the searcher application program provided by the OS level.

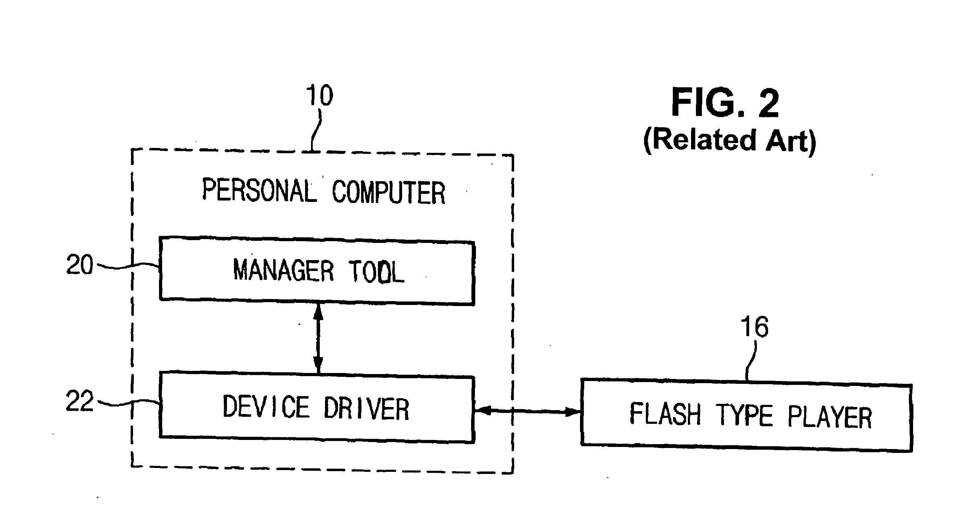

Meanwhile, in order to control a mobile multimedia player with a manager tool, a program for variously controlling a mobile multimedia player must be installed. As shown in Fig. 2, a manager tool 20 and a device driver 22 are installed in the personal computer 10 using an installation program distributed by a mobile multimedia player maker. The mobile multimedia player such as a flash-type player 16 is connected to the personal computer 10 via a connector such as a USB port. The user drives the flash-type player 16 by using the manager tool 20.

Installation of the dedicated manager tool 20 and the dedicated device driver 22 for the mobile multimedia player can prevent uploading of multimedia contents. The manager tool and the device driver can also control various functions of the mobile multimedia player with previously defined commands not provided by the searcher. For example, functions such as change of play sequence and input of channel name when a radio function is provided to the mobile multimedia player can be controlled.

However, the above-described systems for driving a related art mobile multimedia player have their problems. Although the OS and the manager tool can individually control various functions of the player, compatibility between both control methods has not been provided. As a result, a user's range of use for the mobile multimedia player is limited due to the user not being able to control his mobile multimedia player with computers which are not installed with the appropriate control method. Hence, mobility of the multimedia player is hindered.

### SUMMARY OF THE INVENTION

The present invention is directed to a mobile multimedia player driving system and method for interworking a filter driver for processing commands of a manager tool and a mobile disk driver provided by an operating system.

To achieve these and other advantages and in accordance with the purpose of the present invention, as embodied and broadly described, mobile multimedia player systems and methods are provided. Accordingly, it is an object of the present invention to secure the compatibility of mobile multimedia players with control of the OS level and the manager tool. It is another object of the present invention to secure the mobility so that a mobile multimedia player connected to a personal computing device may be easily controlled regardless of installation of a manager in the personal computing device.

In one embodiment, a system for driving a mobile multimedia player, in communication with an operating system, a mobile disk driver, a filter driver and a manager tool, the system comprising an interface means between the mobile disk driver and the mobile multimedia player, wherein when the computing device is connected to the mobile multimedia player, the interface means provides a path between the filter driver and the mobile multimedia player when the manager tool is driven. The operating system is able to control the mobile multimedia player when the mobile disk driver is driven. The manager tool is able to control the mobile multimedia player when the manager tool is driven. The mobile multimedia player comprises a command processing layer for processing a command transmitted from the computing device.

In accordance with one aspect of the invention, the computing device is bi-directionally connected to the mobile multimedia player through a USB port. Further, the mobile multimedia player is one of a flash-type player, a compact disk driving player and a hard disk embedded player. Also, the operating system uses an application program to control the mobile multimedia player. Moreover, a right for interfacing with the mobile multimedia player is intercepted from the mobile disk driver by the filter driver when the interface means provides the path between the filter driver and the mobile multimedia player, wherein the mobile multimedia player cannot be controlled by the operating system when the filter driver intercepts the interface right.

In another embodiment, a method for driving a mobile multimedia player, comprises recognizing a connection to a mobile multimedia player, interfacing with the mobile multimedia player by loading a mobile disk driver provided by an operating system level to a memory when the connection to the player is recognized, controlling the mobile multimedia player by driving an application program provided by the operating system level, loading a filter driver when a manager tool is driven, intercepting an interface right of the mobile disk driver by the filter driver, and interfacing the filter driver with the mobile multimedia player for processing a command from the manager tool with the intercepted interface right.

In accordance with one aspect of the invention, a searcher is driven as the application program. Further, the mobile multimedia player cannot be controlled by the application program when the filter driver intercepts the interface right of the mobile disk driver.

In an exemplary embodiment, a system for driving a connectable mobile multimedia player, comprises a mobile disk driver for loading to a memory and interfacing with a mobile multimedia player when the mobile disk driver is connected to the mobile multimedia player, a manager tool for providing a previously defined command for performing a specific function of the mobile multimedia player, and a filter driver in operation with the manager tool when the manager tool is driven, the filter driver facilitating communication between the manager tool and the mobile multimedia player by intercepting an interface right of the mobile disk driver, wherein the mobile disk driver provides an interface path when the filter driver is loaded.

In another exemplary embodiment, a system for driving a mobile multimedia player, comprises a connecting layer for connecting to a connectable mobile multimedia player, a mobile disk driver located at an upper protocol layer of the connecting layer for interfacing with the mobile multimedia player through the connecting layer, a filter driver located at an upper protocol layer of the mobile disk driver for processing a predetermined command, intercepting an interface right of the mobile disk driver at a loading state and using the mobile disk driver as an interface path, and an application layer comprising a searcher for providing a command to control the mobile multimedia player when the mobile disk driver is loaded and a manager tool for providing the predetermined command to control the mobile multimedia player when the filter driver is loaded, wherein the mobile multimedia player cannot be controlled by the searcher when the filter driver intercepts the interface right of the mobile disk driver at a loading state.

In yet another embodiment, a method for a recording medium, comprises loading a mobile disk driver provided by an operating system level to interface with a mobile multimedia player in response to the mobile multimedia player connecting to a computing device, controlling the mobile multimedia player when an application program provided by the operating system level is driven, loading a filter driver for processing a command from a driven manager tool, wherein the manager tool provides a previously defined command for performing a predetermined function in the mobile multimedia player, intercepting an interface right of the mobile disk driver by the filter driver, and interfacing the filter driver with the mobile multimedia player for processing a command from the manager tool with the interface right, wherein the application program comprises a searcher and the mobile multimedia player cannot be controlled by the application program when the filter driver intercepts the interface right of the mobile disk driver.

In yet another exemplary embodiment, a mobile multimedia player, comprises a connecting layer connectable to a computing device, an SCSI layer located at an upper protocol layer of the connecting layer for transmitting and linking data, a command processing layer located at an upper protocol layer of the SCSI layer for processing a command from a mobile disk driver provided from an operating system level in the computing device and a command from a filter driver provided from a manager tool level in the computing device, and an application layer located at an upper protocol layer of the command processing layer for performing a control function corresponding to a command transmitted from the command processing layer, wherein the command processing layer determines whether a received command is at least one of a command of a mobile disk driver format and a command of a filter driver format, and performs a corresponding operation.

In another embodiment, a recording medium having a program as a protocol, comprises a connecting layer connectable to a computing device, an SCSI layer located at an upper protocol layer of the connecting layer for transmitting and linking data, a command processing layer located at an upper protocol layer of the SCSI layer for processing a command from a mobile disk driver provided from an operating system level in the computing device and a command from a filter driver provided from a manager tool level in the computing device, and an application layer located at an upper protocol layer of the command processing layer for performing a control function corresponding to a command transmitted from the command processing layer, wherein the program controls the recording medium based on the protocol and the command processing layer determines whether a received command is at least one of a command of a mobile disk driver format and a command of a filter driver format, and performs a corresponding operation.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Fig. 1 is a block diagram illustrating a method for driving a mobile multimedia player by a mobile disk driver provided by an operating system level in accordance with the related art.

Fig. 2 is a block diagram illustrating a method for driving a mobile multimedia player with a manager tool in accordance with the related art.

Fig. 3 is a block diagram illustrating a system for driving a mobile multimedia player in accordance with one embodiment of the invention.

Fig. 4 is a structural diagram illustrating a protocol stack of a personal computer of Fig. 3 in accordance with one embodiment of the invention.

Fig. 5 is a structural diagram illustrating a protocol stack of a flash-type player of Fig. 3 in accordance with one embodiment of the invention.

### DETAILED DESCRIPTION OF THE PREFERRED EMBODIMENTS

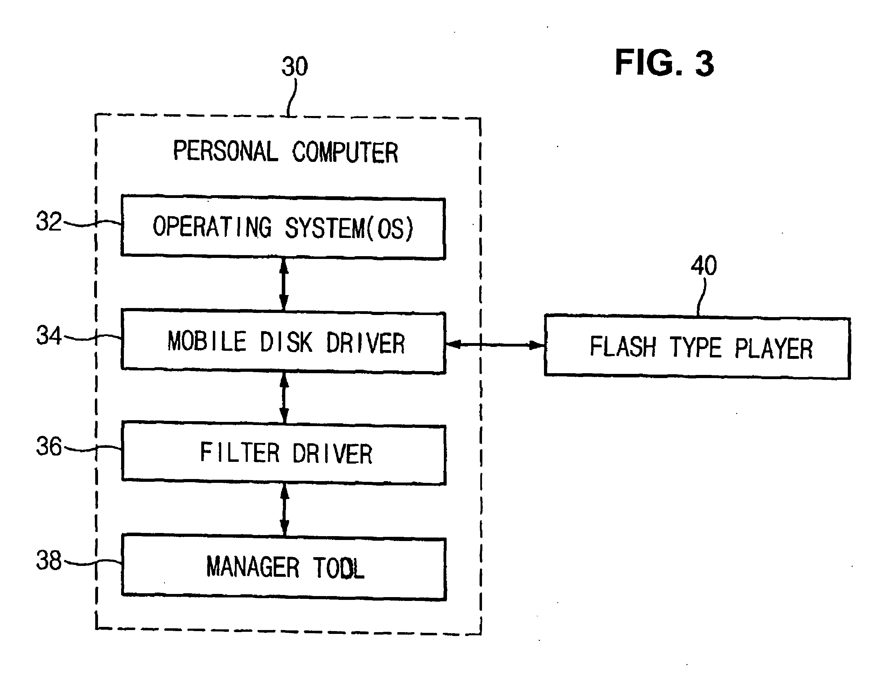

Referring to Figure 3, a personal computer 30 comprises an operating system (OS) 32, a mobile disk driver 34, a filter driver 36 and a manager tool 38. A mobile multimedia player such as a flash-type player 40 interfaces with the mobile disk driver 34.
The operating system 32 is embedded in the personal computer 30 and provides an application program, such as a searcher program, to provide functions of copying, deleting or moving files.

When the flash-type player 40 is connected to a USB port, the mobile disk driver 34 is loaded to a memory (not shown), and the searcher program recognizes the flash-type player as a physical disk. Additionally, the mobile disk driver 34 provides a path for the filter driver 36, loaded when the manager tool 38 is driven, to interface with the flash-type player 40.

The manager tool 38 prevents uploading of multimedia contents and controls various functions of the mobile multimedia player with previously defined commands not provided by the searcher. Specifically, the manager tool 38 performs additional control functions such as inputting channel names when a radio function is provided to a mobile multimedia player and changing play sequence of songs or other digital information. The filter driver 36 is loaded when the manager tool 38 is driven, and interfaces with the flash-type player 40 via the mobile disk driver 34 as described above.

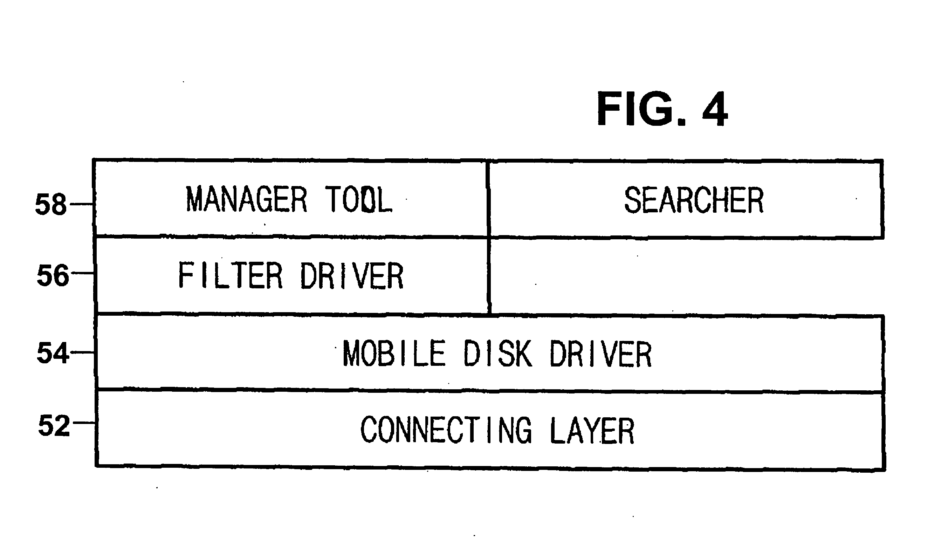

Preferably, the personal computer 30 has a protocol hierarchical structure for communication with the flash-type player 40, as shown in Fig. 4. Referring to Fig. 4, the flash-type player 40 is connected to the personal computer 30 through the USB port, and physically connected through a connecting layer 52, which is a physical layer. The manager tool and the searcher are located in an application layer 58. The filter driver for linking and transmitting data and the mobile disk driver are located in intermediate layers 56 and 54, respectively.

Hereinafter, the function of each layer is described with respect to the above-described hierarchical structure having a stack structure, for example. The filter driver, located in a layer below the manager tool, processes a command generated from the manager tool, and interfaces with the flash-type player 40 through the lower mobile disk driver and the connecting layer 52.

The mobile disk driver, located in a layer 54 between the filter driver and the connecting layer 52, interfaces with the mobile multimedia player through the connecting layer, and provides an exclusive path for the upper filter driver to interface with the flash-type player 40 through the connecting layer when the manager tool is driven. When the exclusive path is provided, a right for interfacing with the mobile multimedia player is intercepted from the mobile disk driver by the filter driver. Thus, the mobile disk driver 35 provides an interface path. Accordingly, the flash-type player 40 is not allowed to be controlled by the searcher when the interface right is intercepted by the filter driver, in accordance with one embodiment.

The application layer 58 comprises the searcher that provides a command for controlling the flash-type player 40 when the mobile disk driver is loaded, and the manager tool which provides a previously defined command when the filter driver is loaded.
As a result, when the loading of the mobile disk driver is preceded by the loading of the filter driver and the manager tool is driven, the interface control right is intercepted by the filter driver. The loading process may depend on the type of physical connection.

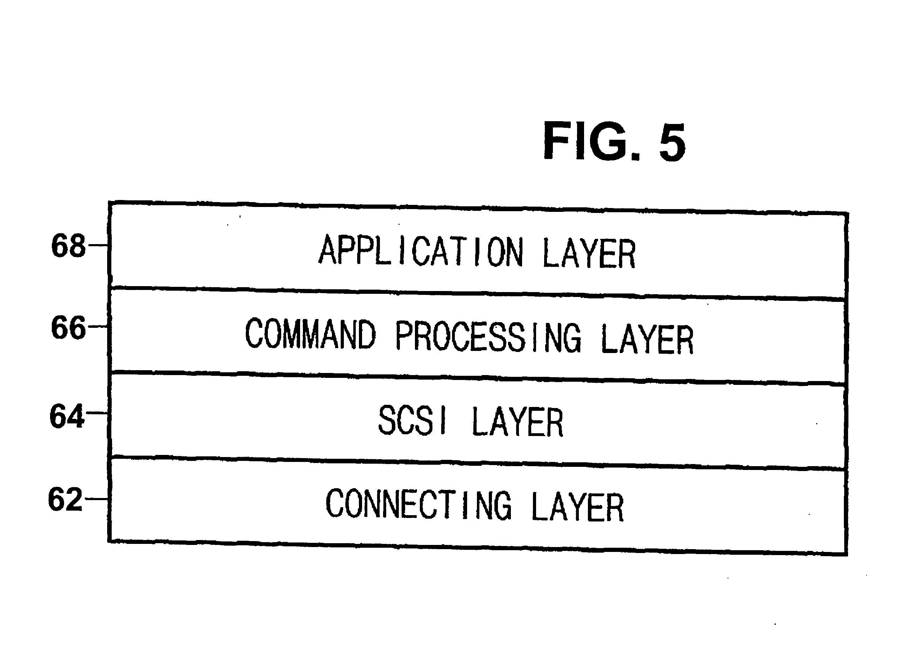

The flash-type player 40 preferably has a stacked protocol hierarchical structure as shown in Fig. 5 for communicating with the personal computer 30. It is noteworthy, however, that other hierarchical structures (e.g., Btrees, FIFO queues), random order structures, or a combination of structures may be utilized in alternative embodiments. The flash-type player 40 comprises a connecting layer 62 as a physical layer and is physically connected to the personal computer 30 through a connector such as the USB port. A SCSI layer 64 is located on the connection layer 62. A command processing layer 66 is positioned on the SCSI layer, and a program for manipulating the flash-type player 40 is located as an application layer 68 on the command processing layer 66.

The SCSI layer 64 transmits and links data, and the command processing layer 66 corresponds to the mobile disk driver 34 and the filter driver 36 of the personal computer 30. The command processing layer 66 allows communication between the personal computer 30 and the flash-type player 40. Specifically, the command processing layer 66 judges whether the command transmitted through the USB port is a command of the mobile disk driver format or a command of the filter driver format, and performs a corresponding operation.

As a result, when the flash-type player 40 is connected to the personal computer 30, which does not have installed the manager tool 38, a user can control the flash-type player 40 with the searcher provided by the OS level of the personal computer 30.
When the flash-type player 40 is connected to the personal computer 30 which does have installed the manager tool 38, a user can control the flash-type player 40 with the manager tool of the personal computer 30.

Hereinafter, an operation is described for a system for driving a mobile player when the above-described manager tool is installed.

A user connects the flash-type player 40 to the personal computer 30 through a USB port. Then, the connection of the USB port is physically recognized in the operating system 32, which then loads the mobile disk driver 34 to a memory. As a result, an interface to the OS 32 level is formed, and the flash-type player 40 can be controlled with the searcher when a user drives the searcher. That is, a user can store new multimedia information in the flash-type player 40 or delete the stored multimedia information by using functions provided by the searcher.

Thereafter, when a user drives the manager tool 38, the filter driver 36 is loaded. The filter driver intercepts an interface right so that the mobile disk driver 34 can only provide an interface path. As a result, a user controls the flash-type player 40 by using functions provided by the manager tool 38 (i.e., a function of providing a previously defined command). Also, a user can change the play sequence or input channel names when a radio function is provided in the mobile multimedia player. Here, the manager tool 40 prevents a user from uploading multimedia contents at random.

Accordingly, in an embodiment of the invention, control by an OS level coexists with that of a manager tool in driving a mobile multimedia player, wherein both control functions are compatible with each other. Additionally, since the mobile multimedia player according to an embodiment of the invention allows for compatibility between a mobile disk driver and a filter driver, a user can control the mobile multimedia player with a random personal computer, thereby promoting mobility.

While the invention is susceptible to various modifications and alternative forms, specific embodiments have been shown by way of example in the drawings and described in detail herein. However, it should be understood that the invention is not limited to the particular forms disclosed. Rather, the invention covers all modifications, equivalents, and alternatives falling within the spirit and scope of the invention as defined in the appended claims.

## Claims

1. A system for driving a mobile multimedia player in communication with a computing device comprising an operating system, a mobile disk driver, a filter driver and a manager tool, the system comprising:
an interface means between the mobile disk driver and the mobile multimedia player,
wherein when the computing device is connected to the mobile multimedia player, the interface menas provides a path between the filter driver and the mobile multimedia player when the manager tool is driven;
wherein the operating system is able to control the mobile multimedia player when the mobile disk driver is driven;
wherein the manager tool is able to control the mobile multimedia player when the manager tool is driven;
wherein the mobile multimedia player comprises a command processing layer for processing a command transmitted from the computing device.

2. The system of claim 1, wherein the computing device is bi-directionally connected to the mobile multimedia player through a USB port.

3. The system of claim 1, wherein the mobile multimedia player is one of a flash-type player, a compact disk driving player and a hard disk embedded player.

4. The system of claim 1, wherein the operating system uses an application program to control the mobile multimedia player.

5. The system of claim 1, wherein a right for interfacing with the mobile multimedia player is intercepted from the mobile disk driver by the filter driver when the interface means provides the path between the filter driver and the mobile multimedia player.

6. The system of claim 5, wherein the mobile multimedia player cannot be controlled by the operating system when the filter driver intercepts the interface right.

7. A method for driving a mobile multimedia player, comprising:
recognizing a connection to a mobile multimedia player,
interfacing with the mobile multimedia player by loading a mobile disk driver provided by an operating system level to a memory when the connection to the player is recognized;
controlling the mobile multimedia player by driving an application program provided by the operating system level;
loading a filter driver when a manager tool is driven;
intercepting an interface right of the mobile disk driver by the filter driver; and
interfacing the filter driver with the mobile multimedia player for processing a command from the manager tool with the intercepted interface right.

8. The method of claim 7, wherein a searcher is driven as the application program.

9. The method of claim 7, wherein the mobile multimedia player cannot be controlled by the application program when the filter driver intercepts the interface right of the mobile disk driver.

10. A system for driving a connectable mobile multimedia player, comprising:
a mobile disk driver for loading to a memory and interfacing with a mobile multimedia player when the mobile disk driver is connected to the mobile multimedia player,
a manager tool for providing a previously defined command for performing a specific function of the mobile multimedia player; and
a filter driver in operation with the manager tool when the manager tool is driven, the filter driver facilitating communication between the manager tool and the mobile multimedia player by intercepting an interface right of the mobile disk driver.

11. The system of claim 10, wherein the mobile disk driver provides an interface path when the filter driver is loaded.

12. A system for driving a mobile multimedia player, comprising:
a connecting layer for connecting to a connectable mobile multimedia player;
a mobile disk driver located at an upper protocol layer of the connecting layer for interfacing with the mobile multimedia player through the connecting layer;
a filter driver located at an upper protocol layer of the mobile disk driver for processing a predetermined command, intercepting an interface right of the mobile disk driver at a loading state and using the mobile disk driver as an interface path; and
an application layer comprising a searcher for providing a command to control the mobile multimedia player when the mobile disk driver is loaded and a manager tool for providing the predetermined command to control the mobile multimedia player when the filter driver is loaded.

13. The system of claim 12, wherein the mobile multimedia player cannot be controlled by the searcher when the filter driver intercepts the interface right of the mobile disk driver at a loading state.

14. A method for a recording medium, comprising:
loading a mobile disk driver provided by an operating system level to interface with a mobile multimedia player in response to the mobile multimedia player connecting to a computing device;
controlling the mobile multimedia player when an application program provided by the operating system level is driven;
loading a filter driver for processing a command from a driven manager tool, wherein the manager tool provides a previously defined command for performing a predetermined function in the mobile multimedia player;
intercepting an interface right of the mobile disk driver by the filter driver; and
interfacing the filter driver with the mobile multimedia player for processing a command from the manager tool with the interface right.

15. The method of claim 14, wherein the application program comprises a searcher.

16. The method of claim 14, wherein the mobile multimedia player cannot be controlled by the application program when the filter driver intercepts the interface right of the mobile disk driver.

17. A mobile multimedia player, comprising:
a connecting layer connectable to a computing device;
an SCSI layer located at an upper protocol layer of the connecting layer for transmitting and linking data;
a command processing layer located at an upper protocol layer of the SCSI layer for processing a command from a mobile disk driver provided from an operating system level in the computing device and a command from a filter driver provided from a manager tool level in the computing device; and
an application layer located at an upper protocol layer of the command processing layer for performing a control function corresponding to a command transmitted from the command processing layer.

18. The mobile multimedia player of claim 17, wherein the command processing layer determines whether a received command is at least one of a command of a mobile disk driver format and a command of a filter driver format, and performs a corresponding operation.

19. A recording medium having a program as a protocol, comprising:
a connecting layer connectable to a computing device;
an SCSI layer located at an upper protocol layer of the connecting layer for transmitting and linking data;
a command processing layer located at an upper protocol layer of the SCSI layer for processing a command from a mobile disk driver provided from an operating system level in the computing device and a command from a filter driver provided from a manager tool level in the computing device; and
an application layer located at an upper protocol layer of the command processing layer for performing a control function corresponding to a command transmitted from the command processing layer;
wherein the program controls the recording medium based on the protocol.

20. The recording medium of claim 19, wherein the command processing layer determines whether a received command is at least one of a command of a mobile disk driver format and a command of a filter driver format, and performs a corresponding operation.
